# EUROPÄISCHE PATENTSCHRIFT

(11) **EP 1 799 017 B1**
(45) Veröffentlichungstag und Bekanntmachung des Hinweises auf die Patenterteilung: **19.11.2008**
(21) Anmeldenummer: 06125353.0
(22) Anmeldetag: 04.12.2006
(51) Int. Cl.: H05B 41/285

(54) **Leuchte und für Schutzklasse 2**
Light for protection class 2
Lumière pour la classe de protection 2

(30) Priorität: 15.12.2005 DE 202005019739 U
(43) Veröffentlichungstag der Anmeldung: 20.06.2007
(73) Patentinhaber: Patent-Treuhand-Gesellschaft für elektrische Glühlampen mbH, 81543 München (DE)
(72) Erfinder: Lecheler, Reinhard, 86633 Neuburg/Donau (DE); Werni, Horst, 80937 München (DE)
(74) Vertreter: Raiser, Franz

(56) Entgegenhaltungen:
- DE-A1- 4 418 886
- DE-A1- 10 307 900
- DE-U1- 20 203 714
- GB-A- 2 316 818

## Beschreibung

### Technisches Gebiet

Die Erfindung betrifft Leuchten mit eingebautem Betriebsgerät, das eine Erdungsklemme aufweist. Insbesondere behandelt die Erfindung Probleme mit der Funkentstörung derartiger Leuchten. Weiterhin betrifft die Erfindung Betriebsgeräte, die für Funkentstörung der genannten Leuchten besonders geeignet sind.

### Stand der Technik

Lichtquellen werden immer häufiger mit einem elektronischen Betriebsgerät betreiben. Unter Lichtquellen werden alle Arten von Lampen aber auch Halbleiter-Lichtquellen wie Leuchtdioden verstanden. Im folgenden werden alle Lichtquellen kurz mit Lampe bezeichnet. Das elektronische Betriebsgerät beinhaltet im wesentlichen eine Wechselrichterschaltung, die an eine Netz- oder Batteriespannung anschließbar ist und elektrische Energie in einer Form erzeugen kann, wie sie zum Betrieb einer Lampe geeignet ist.

Viele Betriebsgeräte weisen einen Erdungsanschluss auf, der im Betrieb mit einem elektrischen Erdpotenzial verbunden werden soll. Solche Betriebsgeräte werden der Schutzklasse 1 zugeordnet. Die hier genannten Schutzklassen sind in der Norm EN 60598-1 definiert. Meist weist ein Betriebsgerät der Schutzklasse 1 ein Metallgehäuse auf und der Erdungsanschluss des Betriebsgeräts ist mit dem Metallgehäuse verbunden. Die Verbindung des Erdungsanschlusses mit einem elektrischen Erdpotenzial ist wichtig für die Sicherheit von Personen bei Berührung des Betriebsgeräts und für die Funkentstörung. Im allgemeinen wird das Erdpotenzial dem Betriebgerät in Form eines sog. Schutzleiters zugeführt. Insbesondere Betriebsgeräte für stabförmige Leuchtstofflampen sind in Schutzklasse 1 ausgeführt.

Viele Leuchten sind in Schutzklasse 2 ausgeführt. Solche Leuchten sind so konstruiert, dass auch ohne Verbindung zu einem Erdpotenzial alle berührbaren Teile der Leuchte keine Gefahr für Personen bedeuten. Leuchten der Schutzklasse 2 wird aus diesem Grund kein Erdpotenzial zugeführt. Sie weisen im allgemeinen auch keinen Schutzleiteranschluss auf. Leuchten der Schutzklasse 2 können elektrisch leitfähige Teile umfassen, die berührbar sind. Diese müssen dann ausreichend gegenüber spannungsführenden Teilen isoliert sein.

Soll eine Leuchte der Schutzklasse 2 mit einem Betriebsgerät bestückt werden, so wird der Fachmann zunächst auf ein Betriebsgerät zurückgreifen, das für Schutzklasse 2 ausgelegt ist und somit in der Regel keinen Erdungsanschluss aufweist. Nicht für alle Lampen ist jedoch ein Betriebsgerät sowohl für Schutzklasse 1 als auch für Schutzklasse 2 verfügbar. Auch können die verschiedenen Ausführungsformen von Betriebsgeräten außer der Schutzklasse weitere Unterschiede aufweisen, die keine freie Auswahl zulassen. Außer im Preis kann der Unterschied z. B. im Temperaturbereich liegen, in dem das Betriebsgerät eingesetzt werden darf. Somit kann es erforderlich werden, dass eine Leuchte der Schutzklasse 2 mit einem Betriebsgerät ausgestattet wird, das einen Erdungsanschluss aufweist. Da einer Leuchte der Schutzklasse 2 kein Schutzleiter zugeführt wird, bleibt der Erdungsanschluss des Betriebsgeräts unbeschaltet. Da die Funkentstörung auf die Beschaltung des Erdungsanschlusses mit dem Schutzleiter ausgelegt ist, führt der unbeschaltete Erdungsanschluss meist zu erhöhten Funkstörungen.

Falls die betreffende Leuchte eine elektrisch leitfähige Montageplatte aufweist kommt es meist zu folgendem Problem: Durch die elektrisch leitfähige Montageplatte werden Funkstörungen verstärkt. Dadurch verletzen derartige Leuchten die einschlägigen Vorschriften zur Funkentstörung.

In der Schrift GB 2 316 818 ist eine Notleuchte beschrieben, die einen batteriebetriebenen Wechselrichter enthält. Ein Ausführingsbeispiel offenbart eine Verbindung eines Ausgangs des Wechselrichters mit einem Metalgehäuse über einen Kondensator.

### Darstellung der Erfindung

Die Aufgabe der vorliegenden Erfindung ist es, eine Funkentstörung für die oben beschriebene Leuchte der Schutzklasse 2 zu bewerkstelligen, die ein Betriebsgerät mit Erdungsanschluss umfasst. Diese Aufgabe wird gelöst durch einen ersten Kondensator, der die Montageplatte mit einem der Netzanschlüsse koppelt und einen zweiten Kondensator, der die Montageplatte mit dem Erdungsanschluss koppelt.

Durch parasitäre Kopplungen wird die Oszillation der oben genannten Wechselrichterschaltung auf das Potenzial der Montageplatte übertragen. Damit erzeugt die Montageplatte sog. Y-Funkstörungen. Dabei handelt es sich um Funkstörungen, die über das Erdpotenzial geleitet werden. Durch die erfindungsgemäßen Kopplungen wird erreicht, dass die von der Wechselrichterschaltung bewirkten Oszillationen auf der Montageplatte so stark gedämpft werden, dass die einschlägigen Vorschriften zur Funkentstörung erfüllt werden.

Ein weiterer Aspekt der Erfindung ist die Bereitstellung eines Betriebsgeräts mit Erdungsanschluss, das beim Betrieb in einer Leuchte der Schutzklasse 2 die Einhaltung einschlägigen Vorschriften zur Funkentstörung ermöglicht. Ein erfindungsgemäßes Betriebsgerät weist einen Anschluss für eine Montageplatte auf, der über einen ersten Kondensator mit einem der Anschlüsse für eine Netzspannung verbunden ist und über einen zweiten Kondensator mit dem Erdungsanschluss verbunden ist. Der erste und der zweite Kondensator der erfindungsgemäßen Leuchte sind im erfindungsgemäßen Betriebsgerät integriert. Ein Verbindungspunkt der beiden Kondensatoren wird über einen zusätzlichen Anschluss mit dem Montageblech verbunden. Der Erdungsanschluss ist bei einem derartigen Betriebsgerät nicht notwendigerweise herausgeführt und kann im inneren des Betriebgeräts liegen.

Die Reduzierung der Funkstörungen durch die erfindungsgemäßen Maßnahmen ist bei Leuchten der Schutzklasse 2 besonders vorteilhaft. Allerdings können die erfindungsgemäßen Maßnahmen auch in andern Leuchten zur Funkentstörung eingesetzt werden.

Die Netzspannung wird über zwei Leitungen der Leuchte zugeführt. Im allgemeinen unterscheidet man zwischen einem Null- oder Neutralleiter und einer Phase. Grundsätzlich kann der erfindungsgemäße erste Kondensator entweder mit dem Nullleiter oder mit der Phase verbunden werden. Da die Funkstörungen gegenüber dem Erdpotenzial auf der Phase meistens etwas stärker sind als auf dem Nullleiter, ist es vorteilhaft den erfindungsgemäß ersten Kondensator mit der Phase zu verbinden.

Der erfindungsgemäße erste Kondensator und der erfindungsgemäße zweite Kondensator weisen über das Montageblech einen Verbindungspunkt auf. Deshalb können die beiden Kondenstoren vorteilhaft zu einem einzigen Bauteil zusammengefasst werden. Dieses Bauteil weist die Serienschaltung des ersten und zweiten erfindungsgemäßen Kondensators auf, wobei der Verbindungspunkt der Kondensatoren aus dem Bauteil herausgeführt ist und für die Kopplung mit dem Montageblech vorgesehen ist. Das Bauteil weist noch die beiden anderen Anschlüsse der Kondensatoren auf, die nicht mit dem Verbindungspunkt verbunden sind. Einer dieser beiden Anschlusse ist zur Kopplung mit dem Nullleiter oder der Phase vorgesehen. Der andere dieser beiden Anschlusse ist zur Kopplung mit dem Erdungsanschluss des Betriebsgeräts vorgesehen.

Oben wurde die Kopplung der Oszillation der Wechselrichterschaltung auf das Montageblech erläutert. Der Vorteil der Erfindung tritt umso stärker zu Tage, je stärker diese Kopplung ist. Am stärksten wäre die Kopplung, falls das Betriebsgerät direkt auf der Montageplatte aufliegt. Sicherheitsvorschriften verbieten dies, falls der Erdungsanschluss des Betriebsgeräts nicht mit einem Schutzleiter verbunden ist und die Montageplatte berührbar ist. Deshalb muss das Betriebsgerät mittels einer Isolierung auf der Montageplatte befestigt sein.

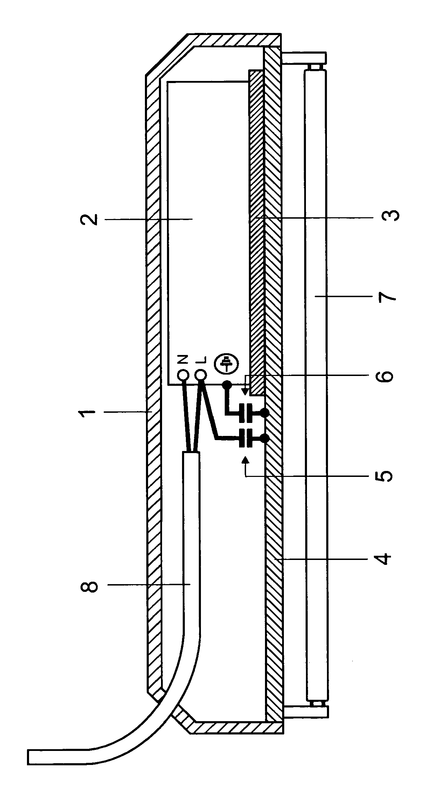

### Kurze Beschreibung der Zeichnung

Im Folgenden soll die Erfindung anhand eines Ausführungsbeispiels näher erläutert. Die Figur zeigt eine erfindungsgemäße Leuchte der Schutzklasse 2.

### Bevorzugte Ausführung der Erfindung

Die Figur zeigt eine Leuchte der Schutzklasse 2 für eine Leuchtstofflampe 7. Die Leuchte umfasst eine Kunststoffabdeckung 1, die eine Seite einer elektrisch leitfähigen Montageplatte 4 abdeckt und somit einen Hohlraum bildet. Außerhalb des Hohlraums ist die Leuchtstofflampe 7 angeordnet. Im Hohlraum befindet sich ein elektronisches Betriebsgerät 2, das mittels einer Isolierung 3 auf dem Montageblech 4 angebracht ist. Das Montageblech 4 besteht z. B. aus einem der Metalle Aluminium, Stahl, Kupfer oder Messing. Das Montageblech 4 kann auch als Reflektor ausgebildet sein.

Das Betriebsgerät 2 weist drei Anschlüsse auf: Einen Anschluss N zum Anschluss des Nullleiters, einen Anschluss L zum Anschluss der Phase und einen Erdungsanschluss. Nicht dargestellt sind die Anschlüsse für die Lampe 7 und deren Zuleitungen.

Durch die Kunststoffabdeckung 1 führt ein Netzkabel 8, das zwei Adern aufweist. Eine Ader ist mit dem Anschluss L verbunden, die andere Ader ist mit dem Anschluss N verbunden. An der dem Betriebsgerät 2 abgewandten Seite, führt das Netzkabel 8 zu einer nicht dargestellten Netzspannungsquelle.

Da es sich um eine Leuchte der Schutzklasse 2 handelt, besitzt das Netzkabel 8 keine dritte Ader für einen Schutzleiter. Das Netzkabel 8 ist deshalb nicht mit dem Erdungsanschluss des Betriebsgeräts verbunden. Erfindungsgemäß ist die Montageplatte 4 über einen ersten Kondensator 5 mit einem Anschluss für die Netzspannung verbunden; im Ausführungsbeispiel handelt es sich dabei um den Anschluss L für die Phase. Weiterhin ist die Montageplatte 4 erfindungsgemäß über einen zweiten Kondensator 6 mit dem Erdungsanschluss verbunden.

Da die Montageplatte 4 berührbar ist, müssen einschlägige Sicherheitsvorschriften beachtet werden. Dies bedingt, dass für die Kondensatoren 5 und 6 sog. Y-Kondensatoren verwendet werden müssen.

Für den ersten Kondensators 5 hat sich im Ausführungsbeispiel ein Wert von 2,2 nF als vorteilhaft erwiesen. Für den zweiten Kondensators 6 hat sich im Ausführungsbeispiel ein Wert von 1,5 nF als vorteilhaft erwiesen. Diese Werte wurden durch Messungen der Funkstörungen empirisch ermittelt. Bei andern Ausführungsbeispielen kann der Fachmann vorteilhafte Werte durch Funkstörmessungen mit verschiedenen Wertekombinationen ermitteln. In der Regel liegen die Werte zwischen 10 pF und 22 nF.

Bei hohen Werten für die Kapazität der Kondensatoren 5 und 6 muss beachtet werde, dass Sicherheitsgrenzwerte für die Berührungsspannung und Ableitströme nicht überschritten werden.

## Patentansprüche

1. Leuchte mit folgenden Merkmalen:
-- ein eingebautes elektronisches Betriebsgerät (2) für eine oder mehrere Lampen (7)
-- das Betriebsgerät (2) weist einen ersten (L) und einen zweiten (N) Anschluss für eine Netzspannung auf,
-- das Betriebsgerät (2) weist einen Erdungsanschluss auf,
-- eine elektrisch leitfähige Montageplatte (4),
**dadurch gekennzeichnet, dass**
ein Anschluss für die Netzspannung (L, N) über einen ersten Kondensator (5) mit der Montageplatte (4) gekoppelt ist und der Erdungsanschluss über einen zweiten Kondensator (6) mit der Montageplatte (4) gekoppelt ist.

2. Leuchte nach Anspruch 1 **dadurch gekennzeichnet, dass** die Leuchte eine Schutzklasse 2 Leuchte ist.

3. Leuchte nach Anspruch 1 oder 2 **dadurch gekennzeichnet, dass**
ein Anschluss für die Netzspannung (L) vorgesehen ist für den Anschluss einer Netzphase und dass dieser Anschluss über den ersten Kondensator (5) mit der Montageplatte (4) gekoppelt ist.

4. Leuchte nach einem der vorigen Ansprüche **dadurch gekennzeichnet, dass**
der erste (5) und der zweite (6) Kondensator in einem Bauelement zusammengefasst sind.

5. Leuchte nach einem der vorigen Ansprüche **dadurch gekennzeichnet, dass**
das Betriebsgerät (2) mittels einer Isolierung (3) auf der Montageplatte (4) befestigt ist.

6. Leuchte nach einem der vorigen Ansprüche **dadurch gekennzeichnet, dass**
die Leuchte zum Betrieb von Leuchtstofflampen (7) ausgelegt ist.

7. Leuchte nach einem der vorigen Ansprüche **dadurch gekennzeichnet, dass**
der Wert des ersten Kondensators (5) 2,2 nF beträgt und der Wert des zweiten Kondensators (6) 1,5 nF beträgt.

8. Leuchte nach einem der vorigen Ansprüche **dadurch gekennzeichnet, dass**
das Betriebsgerät einen Anschluss für eine Montageplatte aufweist, der über den ersten Kondensator mit einem der Anschlüsse für eine Netzspannung verbunden ist und über den zweiten Kondensator mit dem Erdungsanschluss verbunden ist.

## Claims

1. Luminaire having the following features:
-- a built-in electronic control gear (2) for one or more lamps (7)
-- the control gear (2) has a first terminal (L) and a second terminal (N) for a mains voltage,
-- the control gear (2) has an earth terminal,
-- an electrically conductive mounting plate (4),
**characterized in that**
a terminal for the mains voltage (L, N) is coupled to the mounting plate (4) via a first capacitor (5), and the earth terminal is coupled to the mounting plate (4) via a second capacitor (6).

2. Luminaire according to Claim 1, **characterized in that** the luminaire is a protection class 2 luminaire.

3. Luminaire according to Claim 1 or 2, **characterized in that** a terminal for the mains voltage (L) is provided for the connection of a mains phase, and **in that** this terminal is coupled to the mounting plate (4) via the first capacitor (5).

4. Luminaire according to one of the preceding claims, **characterized in that** the first capacitor (5) and the second capacitor (6) are combined in one component.

5. Luminaire according to one of the preceding claims, **characterized in that** the control gear (2) is fastened on the mounting plate (4) by means of insulation (3).

6. Luminaire according to one of the preceding claims, **characterized in that** the luminaire is designed for operating fluorescent lamps (7).

7. Luminaire according to one of the preceding claims, **characterized in that** the capacitance of the first capacitor (5) is 2.2 nF, and the capacitance of the second capacitor (6) is 1.5 nF.

8. Luminaire according to one of the preceding claims, **characterized in that** the control gear has a terminal for a mounting plate, which is connected via the first capacitor to one of the terminals for a mains voltage and via the second capacitor to the earth terminal.

## Revendications

1. Appareil d'éclairage ayant les caractéristiques suivantes :
-- un appareil (2) électronique incorporé pour faire fonctionner une lampe ou plusieurs lampes (7),
-- l'appareil (2) a une première (L) et une deuxième (N) bornes pour une tension de secteur,
-- l'appareil (2) a une borne de mise à la terre,
-- une plaque (4) de montage conductrice de l'électricité,
**caractérisé en ce que**
une borne pour la tension (L, N) du secteur est couplée par un premier condensateur (5) à la plaque (4) de montage et la borne de mise à la terre est couplée par un deuxième condensateur (6) à la plaque (4) de montage.

2. Appareil d'éclairage suivant la revendication 1, **caractérisé en ce que** l'appareil d'éclairage est un appareil d'éclairage de la classe de protection 2.

3. Appareil d'éclairage suivant la revendication 1 ou 2, **caractérisé en ce que**
une borne pour la tension (L) du secteur est prévue pour le raccordement d'une phase du secteur et **en ce que** cette borne est couplée par le premier condensateur (5) à la plaque (4) de montage.

4. Appareil d'éclairage suivant l'une des revendications précédentes, **caractérisé en ce que**
le premier (5) et le deuxième (6) condensateur sont rassemblés dans un composant.

5. Appareil d'éclairage suivant l'une des revendications précédentes, **caractérisé en ce que**
l'appareil (2) est fixé à la plaque (41) de montage au moyen d'un isolant (3).

6. Appareil d'éclairage suivant l'une des revendications précédentes, **caractérisé en ce que**
l'appareil d'éclairage est conçu pour faire fonctionner des lampes (7) fluorescentes.

7. Appareil d'éclairage suivant l'une des revendications précédentes, **caractérisé en ce que**
la capacité du premier condensateur (5) est de 2,2 nF et la capacité du deuxième condensateur (6) est de 1,5 nF.

8. Appareil d'éclairage suivant l'une des revendications précédentes, **caractérisé en ce que**
l'appareil pour faire fonctionner les lampes a une borne pour une plaque de montage, qui est reliée par le premier condensateur à l'une des bornes pour une tension et est reliée par le deuxième condensateur à la borne de mise à la terre.
